# EUROPEAN PATENT APPLICATION

(11) **EP 3 961 432 A2**
(43) Date of publication of application: **02.03.2022**
(21) Application number: 21215597.2
(22) Date of filing: 17.12.2021
(51) Int. Cl.: G06F 16/903

(54) **METHOD AND APPARATUS OF OPTIMIZING SEARCH SYSTEM**

(30) Priority: 22.12.2020 CN 202011530562
(71) Applicant: BEIJING BAIDU NETCOM SCIENCE TECHNOLOGY CO., LTD., No.10 Shangdi 10th Street Haidian District Beijing 100085 (CN)
(72) Inventor: ZHEN, Zhen, Beijing, 100085 (CN); XUE, Zunyao, Beijing, 100085 (CN); CHEN, Jiajie, Beijing, 100085 (CN); ZHENG, Zhixun, Beijing, 100085 (CN); FAN, Biao, Beijing, 100085 (CN)
(74) Representative: Carpmaels & Ransford LLP

(57) **Abstract**

The present disclosure provides a method and apparatus of optimizing a search system, which relates to a field of data processing, and in particular to a field of data search. The method is implemented to include: determining a first hit rate of a cache unit of the search system for a plurality of user queries, wherein each user query is associated with a plurality of elements; for each element in a first set of elements of the plurality of elements, determining at least one key element by: generating a plurality of first queries that correspond to the plurality of user queries, wherein the plurality of first queries are associated at least with the element; determining a second hit rate of the offline cache unit for the plurality of first queries; and determining the element as one of at least one key element in response to determining that a difference between the second hit rate and the first hit rate is less than a difference threshold; and optimizing the search system based on the at least one key element.

## Description

### TECHNICAL FIELD

The present disclosure relates to a field of data processing technology, in particular to a field of data search technology, and more specifically to a method and apparatus of optimizing a search system, an electronic device, a computer-readable storage medium and a computer program product.

### BACKGROUND

In the era of network information, a search system needs to deal with massive user queries at all times. In order to improve a response speed and reduce a computational overhead, a cache (sometimes referred to as a cache unit herein) in the search system is very important to an overall resource consumption of the search system. When the search system processes the same query again, it may directly find corresponding query results from the cache in response to the user query, so as to reduce a processing pressure of the search system and improve the response speed. Accordingly, a change in a cache hit rate may lead to a change in the overall resource consumption of the search system. For example, when the cache hit rate decreases, the computational overhead of the search system may increase. The cache hit rate may be affected by various factors. Therefore, there is a need to efficiently determine a factor that affects the cache of the search system, and then optimize the search system.

### SUMMARY

Embodiments of present disclosure provide a method of optimizing a search system, an electronic device, and a computer-readable storage medium.

According to an aspect, there is provided a method of optimizing a search system, including: determining a first hit rate of a cache unit of the search system for a plurality of user queries, wherein each user query is associated with a plurality of elements; for each element in a first set of elements of the plurality of elements, determining at least one key element by: generating a plurality of first queries corresponding to the plurality of user queries, wherein the plurality of first queries are associated with at least the element; determining a second hit rate of the cache unit for the plurality of first queries; and determining the element as one of at least one key element, in response to determining that a difference between the second hit rate and the first hit rate is less than a difference threshold; and optimizing the search system based on the at least one key element.

According to another aspect, there is provided an apparatus of optimizing a search system, including: a first hit rate determination module configured to determine a first hit rate of a cache unit of the search system for a plurality of user queries, wherein each user query is associated with a plurality of elements; a key element determination module configured to: for each element in a first set of elements of the plurality of elements, determining at least one key element by: generating a plurality of first queries corresponding to the plurality of user queries, wherein the plurality of first queries are associated at least with the element; determining a second hit rate of the cache unit for the plurality of first queries; and determining the element as one of at least one key element, in response to determining that a difference between the second hit rate and the first hit rate is less than a difference threshold; and an optimization module configured to optimize the search system based on the at least one key element.

According to another aspect, there is provided an electronic device, including: at least one processor; and a memory communicatively connected to the at least one processor, wherein the memory stores instructions executable by the at least one processor, and the instructions, when executed by the at least one processor, cause the at least one processor to implement the method of optimizing a search system according to embodiments of the present disclosure.

According to another aspect, there is provided a non-transitory computer-readable storage medium having computer instructions stored thereon, wherein the computer instructions allow a computer to implement the method of optimizing a search system according to embodiments of the present disclosure.

According to another aspect, there is provided a computer program product containing a computer program, wherein the computer program, when executed by a processor, causes the processor to implement the method described in the first aspect of the present disclosure.

It should be understood that content described in this section is not intended to identify key or important features in the embodiments of the present disclosure, nor is it intended to limit the scope of the present disclosure. Other features of the present disclosure will be easily understood through the following description.

### BRIEF DESCRIPTION OF THE DRAWINGS

The above and other features, advantages and aspects of the embodiments of the present disclosure will become more apparent in combination with the drawings and with reference to the following detailed description. The drawings are used to better understand the solution and do not constitute a limitation to the present disclosure. In the drawings, same or similar reference numerals indicate same or similar elements.
FIG. 1 shows a schematic diagram of an exemplary environment in which various embodiments of the present disclosure may be implemented.
FIG. 2 shows a flowchart of a method of optimizing a search system according to some embodiments of the present disclosure.
FIG. 3 shows a flowchart of a method of determining at least one key element according to some embodiments of the present disclosure.
FIG. 4 shows a schematic diagram of hit rate curves according to some embodiments of the present disclosure.
FIG. 5 shows a flowchart of a method of determining a number of the user queries hit in a cache unit according to some embodiments of the present disclosure.
FIG. 6 shows a flowchart of a method of determining a number of the first user queries hit in the cache unit according to some embodiments of the present disclosure.
FIG. 7 shows a schematic diagram of hit rate curves according to some embodiments of the present disclosure.
FIG. 8 shows a block diagram of an apparatus of optimizing a search system according to some embodiments of the present disclosure.
FIG. 9 shows a block diagram of an electronic device for implementing the various embodiments of the present disclosure.

### DETAILED DESCRIPTION OF EMBODIMENTS

The exemplary embodiments of the present disclosure are described below with reference to the drawings, which include various details of the embodiments of the present disclosure to facilitate understanding, and which should be considered as merely illustrative. Therefore, those ordinary skilled in the art should realize that various changes and modifications may be made to the embodiments described herein without departing from the scope and spirit of the present disclosure. In addition, for clarity and conciseness, descriptions of well-known functions and structures are omitted in the following description.

In the description of the embodiments of the present disclosure, the term "including" and similar terms should be understood as open-ended inclusion, that is, "including but not limited to". The term "based on" should be understood as "at least partially based on." The term "an embodiment," "one embodiment" or "this embodiment" should be understood as "at least one embodiment." The terms "first," "second," and the like may refer to different or the same objects. The following may also include other explicit and implicit definitions.

As discussed above, when a cache hit rate changes, especially when the cache hit rate decreases, it is desirable to determine a key element affecting the cache hit rate. In some schemes, the key element affecting the cache hit rate may be manually determined by observing a number of the user queries received by the search system, a network health status, a data retention time in the cache unit and other indicators, determining whether these indicators are consistent with a change trend of the cache hit rate, and combining the determination with experience. In other schemes, reasons affecting the cache hit rate may also be classified. For example, data exists in the cache but an access to the data is unavailable due to network and other reasons; data are missing due to migration of a storage instance; data do not exist due to an external active deletion; an expiration period of data has passed or data do not exist. However, the schemes described above generally require a determination by an experienced person, so it usually takes a certain time to optimize the search system. Moreover, the schemes described above may not determine the key element from a level of a plurality of elements associated with a user query, so that a reason for the change in the cache hit rate may not be determined.

Embodiments of the present disclosure propose a technical solution of determining the key element affecting the cache unit and then optimizing the search system. In this solution, one or more key elements that have a great impact on the hit rate may be determined in a case that, for example, the cache hit rate significantly changes, by splitting a plurality of elements associated with the user query, determining a hit rate of the cache unit for a first query associated with a single element, and comparing the hit rate for the first query with a hit rate of the cache unit for a real and multi-element user query.

In this way, the change in the hit rate may be analyzed in a level of the elements forming the user query, so as to efficiently and accurately determine one or more key elements that have a great impact on the cache hit rate, and then optimize the search system based on the key elements determined. In this way, performance of the search system may be improved in a plurality of aspects such as the hit rate of the cache, the hit rate of the search system, the response time of the search system, and the computational overhead of the search system.

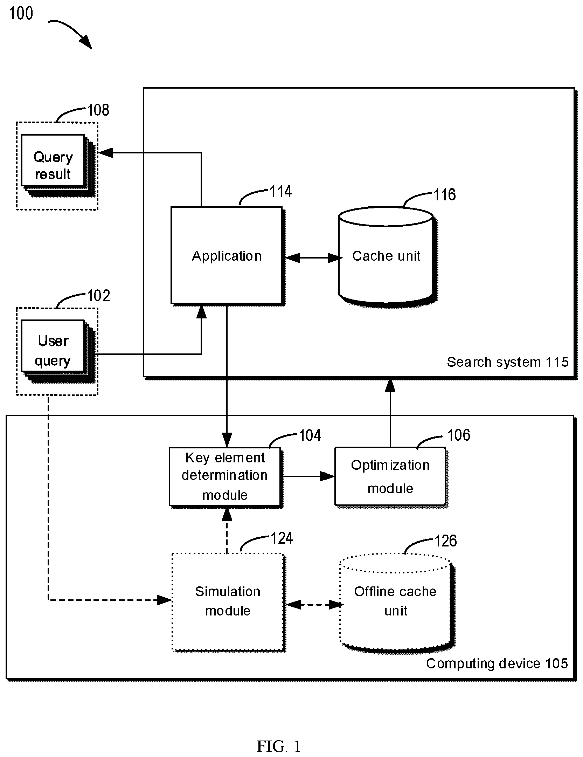

FIG. 1 shows a schematic diagram of an example environment 100 in which various embodiments of the present disclosure may be implemented.

The exemplary environment generally includes a search system 115 and a computing device 115. In the description of the embodiments of the present disclosure, the term "search system" refers to a system for returning a query result 108 in response to a user query 102. The search system 115 generally includes a cache unit 116 (sometimes referred to as a cache or a cache system). The search system 115 may further include an application 114 and a storage unit (not shown) for permanently storing data.

A plurality of historical user queries and corresponding historical query results may be stored in the cache unit 116, so that a real-time query from a user may be responded quickly. These historical query results are corresponding query results retrieved by the search system 115 from the storage unit (not shown) for permanently storing data through a series of processes. In some embodiments, the series of processes may include, for example: receiving a (historical) user query request (via the application 114, for example); segmenting a text contained in the user query so as to determine at least one query term; calculating a weight of each query term; generating a query vector based on the weight and the at least one query term; transmitting an inverted list of the corresponding query term in the storage unit into a memory; determining a set of query results by an intersection of the inverted list of the corresponding query term; sorting the query results so as to determine query results with a high degree of association for an output (via the application 114, for example).

It may be understood that the above series of processes may take a lot of time and may consume a lot of computing resources. Therefore, the search system generally firstly searches in the cache unit whether the user query that has been processed by the application 114 (through a signature algorithm, for example) has a corresponding query result or not. A query text with high query frequency and the corresponding query results determined by the above series of processes are usually stored in the cache unit 116. When the same or different user conducts a user query containing the same query text again, the search system may directly use the corresponding query results in the cache unit 116 to respond to the user query. Only in a case of failing to match the query results in the cache unit 116, the above series of processes are executed. In this way, a series of processes for a part of user queries, such as segmenting the text, calculating the weight and matching the key word, may be omitted. Therefore, a search system with an appropriate cache (for example, with a high cache hit rate) may respond to the user query in time, so as to improve user experience and save a lot of computing resources. It may be understood that each user query may be associated with a time for conducting the user query.

In some embodiments, considering that the user query has a certain timeliness, the search system 115 may set a data expiration period for the user query cached in the cache unit 116 and the associated query results, for example, through a user behavior analysis. Data beyond the data expiration period may not be returned by the cache system 116 to the application 114. In some embodiments, the data beyond the data expiration period may be cleaned or eliminated periodically so as to maintain a high utilization rate of a storage space and a high response speed of the cache unit.

In some embodiments, in the cache unit 116 (and/or an offline cache unit 126), the user query and the associated query result may be stored as a key-value pair. The user query may correspond to a key, and the query result may correspond to a value. In some embodiments, the key-value pair may be associated with a time for writing the key-value pair, so as to subsequently determine the data expiration period. In some other embodiments, the user query and the associated query result may be stored in association in other ways.

In some embodiments, if a key-value pair corresponding to the user query 102 exists in the cache unit 116, and a period between the time corresponding to the user query 102 and the write time associated with the key-value pair is less than the data expiration period, then the cache unit 116 may return the value in the key-value pair to the application 114. The value may contain, for example, the query result 108 for the user query, which may include but is not limited to a file, a picture, a web link, and so on. If the key-value pair corresponding to the user query 106 does not exist in the cache unit 116, or the period between the time corresponding to the user query 102 and the write time associated with the key-value pair is greater than the data expiration period, the cache unit 116 may not return the corresponding query result to the application 114. In other words, a query result being null may be returned. In this case, the search system may further perform the above series of processes to determine the query result in the storage unit, and update the cache unit 116 (for example, store or insert the key-value pair into the cache unit 116) with the key-value pair for the user query-query result at a predefined time. The predefined time may be, for example, real-time, every predetermined period, or at a time when few user queries are conducted (for example, early in the morning).

The application 114 may be configured as an interface with the user, to receive the user query 102 and return the corresponding query result 108. In some embodiments, the application may generate keys for a plurality of elements associated with the user query 102. This may be realized, for example, by various signature algorithms. Examples of signature algorithms include but are not limited to MD5 algorithm, RSA algorithm, DSS algorithm and SHA algorithm.

In the description of the embodiments of the present disclosure, the term "element" refers to a query element used to match a corresponding result in the cache unit and/or the storage unit. Examples of the element include but are not limited to: a type of a terminal providing the user query, location information for the terminal providing the user query, a key phrase contained in the user query, a time that the user query is conducted, a filtering condition contained in the user query, a number of pages containing query results corresponding to the user query, a number of query result entries contained in each of the pages containing query results corresponding to the user query, traffic tag(s) associated with the user query, an indicator indicating whether the user query belongs to a stress testing, and so on. In some embodiments, each user query may be associated with the same number of elements. In some cases, some elements may not be contained in the user query. For example, in a case that the filtering condition is not set for the user query, the corresponding element may be set to have a value of 0 so that the user query may contain the same number of elements to generate keys with the same number of digits.

In addition to returning the query result 108 to the user, the application 114 may further transmit information about whether the query result 108 is found in the cache unit 116, to the computing device 105. For example, for a given query, if the corresponding query result is found in the cache unit 116, it may be called a hit, and the application 114 may, for example, transmit a first signal (for example, 1) to the computing device 105. If the corresponding query result is not found in the cache unit 116, it may be called a miss, and the application 114 may, for example, transmit a second signal (for example, 0) to the computing device 105.

The computing device 105 may determine the hit rate of the cache unit (sometimes referred to herein as a cache hit rate or a first hit rate) by using the first signal and the second signal. In the description of the embodiments of the present disclosure, unless explicitly stated to the contrary, the term "hit rate" refers to the hit rate of an (for example, online or offline) "cache unit" for a plurality of queries (for example, the user query or a first query discussed below).

The computing device 105 may include a key element determination module 104, an optimization module 106, an (optional) simulation module 124, and an (optional) offline cache unit 126. The simulation module 124 corresponds to the application 114 in functions, and the offline cache unit 126 corresponds to (for example, is the same as or similar to) the cache unit 116 in the data stored therein. By using the offline cache unit and the simulation module, the key element may be determined without affecting the user experience.

Because each user query in the plurality of user queries (for example, x user queries including user query 1 to user query x, where x is a positive integer greater than 1) is associated with a plurality of query elements (for example, n elements including element 1 to element n, where n is a positive integer greater than 1), the computing device 105 may, for example, use the simulation module 124 to build x first queries for each element of the n query elements. Each of the x first queries is at least associated with the element. Then, the corresponding key (for example, key 1 to key x) is determined by a signature algorithm. For example, for the element 1, a first query 1 to a first query x associated with the element 1 may be generated, and the x first queries are all associated with the element 1. For the element 2, a first query 1 to a first query x associated with the element 2 may be generated, and the x first queries are all associated with the element 2 and optionally associated with the element 1. Similarly, for the element i (i is a positive integer greater than 1 and less than or equivalent to n), a first query 1 to a first query x associated with the element i may be generated, and the x first queries are all associated with the element i and optionally associated with the element 1 to the element i-1.

The computing device 105 may determine whether the corresponding query results for the x first queries may be found in the offline cache unit 126 or not. For example, the computing device may transmit x keys (for example, key 1 to key x) corresponding to x first queries to the offline cache unit 126 via the simulation module 124, receive the results (for example, x values including value1 to value x) returned by the offline cache unit, and determine the second hit rate accordingly. It may be understood that when there is no corresponding key in the offline cache unit 126, the returned value may be 0.

Similarly, for a given first query, if a corresponding query result is found in the offline cache unit 126, it may be called a hit (which may be identified by a first signal such as 1). If no corresponding query result is found in the offline cache unit 126, it may be called a miss (which may be identified by a second signal such as 0).

The key-value pair(s) in the offline cache unit 126 may be the same as that (those) in the cache unit 116 so as to simulate a real cache unit. In order to further reduce the storage space occupied by the offline cache unit without affecting the simulation of the real cache unit, the key(s) in the key-value pair(s) in the offline cache unit 126 may be the same as that (those) in the key-value pair(s) in the cache unit 116, while the value(s) in the key-value pair(s) in the offline cache unit 126 may be set as a simple placeholder (for example, 1) to indicate whether a result corresponding to the first query exists in the cache unit or not.

In some embodiments, the user query may be forwarded (for example, asynchronously) by the application 114 to the simulation module 124 for processing. In other embodiments, the simulation module 124 may also be configured with an interface for receiving the user query 102.

In some embodiments, if the search system 115 has sufficient resources to process the query request (for example, a resource utilization is lower than a predetermined value and/or the response time is less than a predetermined value, so that the implementation of the functions of the simulation module 124 and the offline cache unit 126 does not affect the user experience), the application 114 and the cache unit 116 may also be configured by the computing device to have the same functions as the simulation module 124 and the offline cache unit 126. In these embodiments, the simulation module 124 and the offline cache unit 126 may also be omitted.

All signals indicating whether the user query and the first query hit or not may be processed by the computing device 105 according to the solution described in the present disclosure (for example, at the key element determination module 104) so as to determine one or more key elements that have a great impact on the cache unit hit rate.

Based on the key elements determined, the computing device 105 may optimize the search system, for example, through the optimization module 106, so as to stabilize or even improve the hit rate of the cache unit, thereby reducing the computing overhead of the search system and improving the response speed for the user query. The optimization operation includes, but is not limited to, updating the key-value pairs stored in the cache unit, adjusting (for example, some or all) data expiration periods of the cache unit, adjusting the type and number of the elements associated with the user query (for example, when there is a new user query source or a new filtering condition), adjusting a data elimination strategy in the cache unit, adjusting the data stored in different levels of cache, and so on, according to the key elements determined.

It may be understood that the search system 115 and the computing device in the exemplary environment 100 may process the user query in real time and determine the key elements that affect the hit rate.

For clarity, the embodiments of the present disclosure will be described below with reference to the environment 100 in FIG. 1. It should be understood that the embodiments of the present disclosure may further include additional actions not shown, and/or actions shown may be omitted. The scope of the present disclosure is not limited in this respect. For ease of understanding, the specific data mentioned in the following description are all exemplary and are not used to limit the protection scope of the present disclosure.

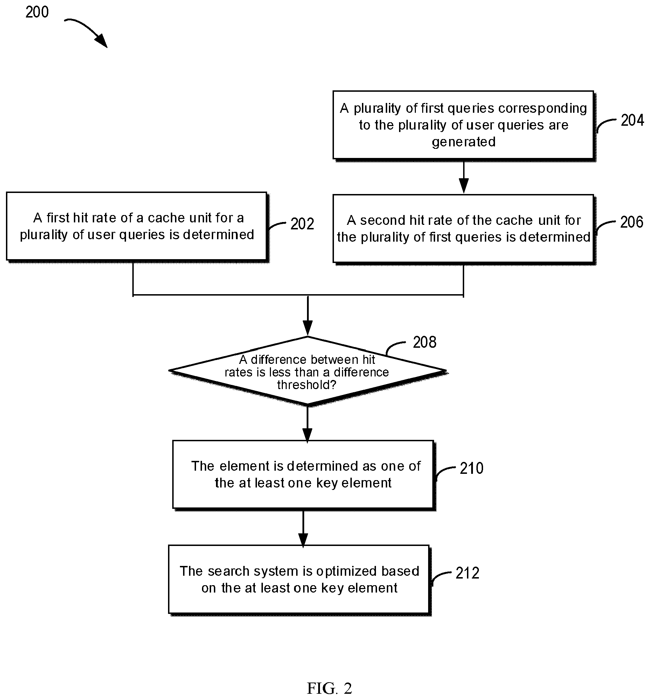

FIG. 2 shows a flowchart of a method 200 of optimizing a search system according to some embodiments of the present disclosure. For example, the method 200 may be implemented by the computing device shown in FIG. 1.

In step 202, the computing device 105 may determine the first hit rate of the cache unit of the search system 115 for a plurality of user queries.

Specifically, as discussed above, because each user query in the plurality of user queries (for example, x user queries including user query 1 to user query x, where x is a positive integer greater than 1) may be associated with a plurality of query elements (for example, n elements including element 1 to element n, where n is a positive integer greater than 1), the first hit rate may be affected by the plurality of elements. In some embodiments, the plurality of elements may include but not be limited to: a type of a terminal providing the user query, location information for the terminal providing the user query a key phrase contained in the user query, a time when the user query is conducted, a filtering condition contained in the user query, a number of pages of the query results corresponding to the user query, a number of query result entries contained in each page of the query results, traffic tag(s) associated with the user query, an indicator indicating whether the user query belongs to a stress testing, and so on. It may be understood that each user query may be associated with a time for conducting the user query.

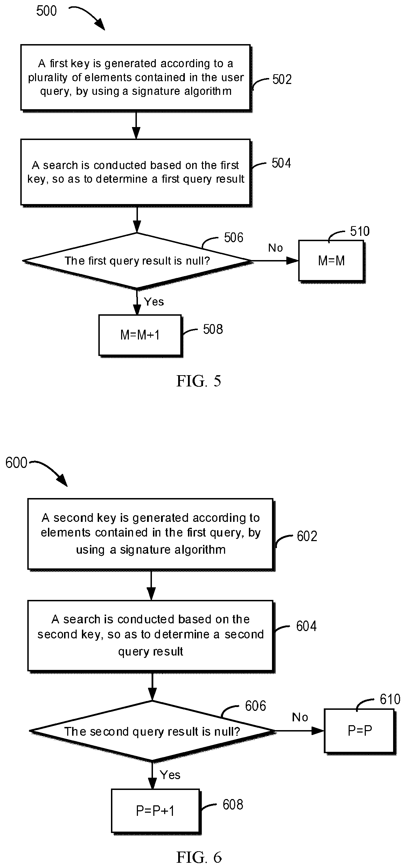

The first hit rate may be defined as a ratio of a first number of queries having respective query results retrievable in the cache unit among a plurality of user queries to a total number of the plurality of user queries within a predetermined period of time (for example, 1 minute, 10 seconds, 10 minutes, or any other suitable time period). The method of determining the first number will be discussed in detail below with reference to FIG. 5.

It may be understood that the first hit rate may be affected to different degrees by various elements, and at least one key element affecting the first hit rate may also change in a plurality of predetermined time periods. Therefore, for each element in a first set of elements in the plurality of elements, following steps (for example, step 204 to step 208) may be performed to determine at least one key element. In some embodiments, the first set of elements may include all of the elements, in other words, a complete set of the plurality of elements.

In step 204, the computing device 105 may generate a plurality of first queries corresponding to the plurality of user queries.

The first query may be associated with at least the each element. Therefore, for example, for element 1, x first queries (for example, first query 1 to first query x, which are associated with the element 1) may be constructed, and the x first queries are only associated with the element 1. In some embodiments, the first query may also be associated with more elements in the first set of elements. For example, for element i, each of the plurality of first queries is associated with the element i and the element 1 to element i-1. It may be understood that the x first queries associated with the each element listed above are only examples, and the number of the elements included therein has an increasing relationship with the serial number of the elements. In some other examples, these first queries may also be generated in a decreasing manner. For example, for element i, x first queries associated with the element i only may be generated, and for element i-1, x first queries associated with both the element i and the element i-1 may be generated. A generation of x first queries in any other manner in that different elements may be distinguished separately is included in the scope of the present disclosure. In step 206, the computing device 105 may determine the second hit rate of the cache unit for the plurality of first queries.

The second hit rate is a ratio of a second number of first queries having respective query results retrievable in the offline cache unit among the plurality of first queries to a total number of the plurality of first user queries within a predetermined period of time. The method of determining the second number will be discussed in detail below with reference to FIG. 6.

As discussed above, in some embodiments, if the search system 115 has sufficient resources to process the query request (for example, a resource utilization of the search system 115 is lower than a predetermined value and/or the response time is less than a predetermined value, so that the implementation of the functions of the simulation module 124 and the offline cache unit 126 does not affect the user experience), the step 204 and the step 206 may be executed through instructing, by the computing device, the application 114 and the cache unit 116 in the search system and acquiring a plurality of corresponding signals from the search system 115 for analysis.

In other embodiments, the step 204 and the step 206 may be implemented entirely at the computing device 105 configured with, for example, the corresponding simulation module 124 and offline caching unit 126. Therefore, the offline cache unit 126 corresponding to the cache unit may be pre-constructed, and the computing device 105 may transmit the plurality of first queries to the offline cache unit and determine the hit rate of the offline cache unit for the plurality of first queries as the second hit rate.

In some embodiments, the computing device 105 may generate the plurality of first queries asynchronously with processing the plurality of user queries by the search system 115. For example, the search system 115 may firstly process the user query to return query results, and then transmit the user query to the simulation module so as to generate the first queries asynchronously. Each first query corresponds to an element. Then, the simulation module may determine the corresponding key for the first query, for example, through the signature algorithm, and then determine whether there is a corresponding key-value pair in the offline cache unit, and return the value. It may be understood that when there is no corresponding key-value pair, the returned value may be null (for example, 0 or null).

In step 208, the computing device may determine whether a difference between the second hit rate and the first hit rate is less than a difference threshold or not. If the difference between the second hit rate and the first hit rate is less than the difference threshold, step 210 is performed and the computing device 105 determines the element as one of the at least one key element. On the contrary, if the difference between the second hit rate and the first hit rate is not less than the difference threshold, the computing device 105 does not determine the element as one of the at least one key element.

In some embodiments, the difference threshold may be selected as a fixed value so that all key elements corresponding to a small difference are determined as the key elements. In some embodiments, at different time periods, the difference threshold (for example, to be used in a second period later than the first period) may also be adjusted according to the number of the at least one key element determined (for example, in the first period).

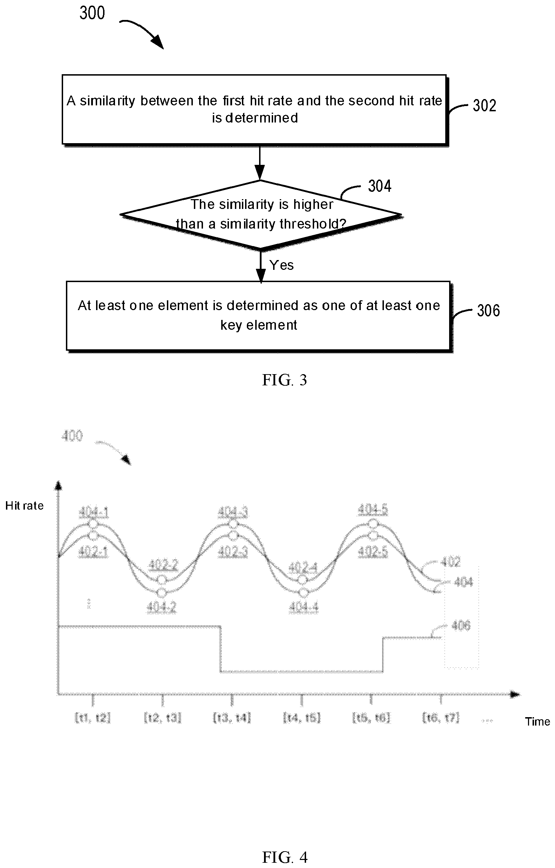

In some embodiments, the above difference may be determined by determining, for example, a similarity between the hit rates (for example, curves), which will be described in detail below with reference to FIG. 3, FIG. 4 and FIG. 7. It may be understood that the step 204 to the step 208 may be executed on all of the plurality of elements (for example, n elements including element 1 to element n, where n is a positive integer greater than 1). The execution process may be synchronous or asynchronous, and the present disclosure is not limited in this respect.

In some embodiments, the first set of elements for which the second hit rate is to be determined may also include just some elements of the plurality of elements, so as to exclude stable elements (for example, the type of the terminal on which the user query is conducted) in some time periods, so that the processing efficiency of the computing device 105 may be improved. In these embodiments, the first set of elements may be selected with reference to the difference between the first hit rate and the second hit rate in history.

In step 212, the computing device 105 may optimize the search system 115 based on the at least one key element.

Based on the at least one key element determined, the computing device 105 may optimize the search system, for example, through the optimization module 106, so as to stabilize or even improve the hit rate of the cache unit, thereby reducing the computing overhead of the search system 115 and improving the response speed for the user query. The optimization operation includes, but is not limited to, updating the key-value pairs stored in the cache unit, adjusting (for example, some or all) data expiration periods of the cache unit, adjusting the type and number of the elements associated with the user query (for example, when there is a new user query source or a new filter condition), adjusting a data elimination strategy in the cache unit, adjusting the data stored in different levels of cache, and so on, according to the key elements determined.

According to embodiments of the present disclosure, the key elements affecting the search system may be determined efficiently, and the performance of the search system may be optimized accordingly.

In some embodiments, in a case that a large number of at least one key elements are determined, the computing device 105 may also determine a predetermined number of (for example, any of 1 to 5) key elements from the at least one key elements, for optimization of the search system. In this case, the computing device may sort the difference between the second hit rate and the first hit rate (for example, by the similarity described below), and determine a predetermined number of key elements with a minimum difference (for example, the highest similarity) for optimization of the search system.

In this way, the change in the hit rate may be analyzed from a level of the elements forming the user query, so as to determine one or more key elements that have a great impact on the cache hit rate in a case of significant changes in the cache hit rate, and then optimize the search system based on the key elements determined, so as to improve the performance of the search system in various aspect such as the hit rate of the cache, the hit rate of the search system, the response time of the search system, the computing overhead of the search system, and so on.

FIG. 3 shows a flowchart of a method 300 of determining at least one key element according to some embodiments of the present disclosure. Specifically, the method 300 may be a specific process of the step 208 in FIG. 2. The method 300 is a process for one element of the plurality of elements, and it may be understood that the process may be performed on all of the plurality of elements.

In step 302, the computing device 105 may determine the similarity between the first hit rate and the second hit rate.

The similarity may be determined based on a variety of ways, for example, calculated by using cosine angle, Euclidean distance, Pearson correlation coefficient, and so on.

In some embodiments, the computing device 105 may draw a hit rate curve indicative of each element of the n elements in a plurality of time periods, and evaluate the similarity based on the hit rate curve.

Specifically, in the search system 115, some elements of the plurality of elements in the user query are stable, and a distribution of these elements in the time series changes little, so these elements have little impact on the cache hit rate. Other elements, such as a user query text (for example, a query text related to breaking news events), have an impact on the cache hit rate that cannot be ignored. In different periods, these key elements may be different. Therefore, at least one key element of the plurality of elements in different time periods may be determined by drawing the hit rate curve in different time periods, and then the search system and/or the cache unit may be adjusted based on the key element.

A description is now given with reference to FIG. 4. FIG. 4 shows a schematic diagram 400 of hit rate curves according to some embodiments of the present disclosure. The computing device 105 may draw a first curve 402 for the first hit rate, and second curve(s) 404, 406 for the second hit rate. As an example, FIG. 4 only shows the cache hit rate curve 402 for the real user query, and the simulated hit rate curves 404 and 406. The simulated hit rate curve 406 may, for example, indicate the second hit rate for the first query associated with at least the element 1, and the simulated hit rate curve 404 may, for example, indicate the second hit rate for the first query associated with at least the element 1 and the element 2. It may be understood that the computing device 105 may also draw other curves (not shown) to determine the key elements.

For example, the computing device 105 may determine a total number of the user queries in a period from t1 to t2, and determine a first number of the user queries corresponding to query results retrievable in the cache system in the period from t1 to t2 (the method of determining the first number will be discussed below in detail with reference to FIG. 5), and determine a ratio of the first number to the total number of the user queries so as to determine a hit rate 402-1. In a similar manner, the computing device 105 may also determine a hit rate 402-2 in a period from t2 to t3, a hit rate 402-3 in a period from t3 to t4, a hit rate 402-4 in a period from t4 to t5, a hit rate 402-5 in a period from t5 to t6, and so on. Based on these hit rate points, the computing device 105 may draw a first curve 402 for the first hit rate.

For the first query associated with each query element (such as element 1), the computing device 105 may further determine a total number of the first queries in the period from t1 to t2, and determine a second number of user queries corresponding to query results retrievable in the cache system in the period from t1 to t2 (the method of determining the second number will be discussed below in detail with reference to FIG. 6), and determine a ratio of the second number to the total number of the first queries so as to determine a hit rate 404-1. In a similar manner, the computing device 105 may also determine a hit rate 404-2 in a period from t2 to t3, a hit rate 404-3 in a period from t3 to t4, a hit rate 404-4 in a period from t4 to t5, a hit rate 404-5 from a period from t5 to t6, and so on. Based on these hit rate points, the computing device 105 may draw a second curve 404 of the second hit rate for the element 1.

Then, the computing device 105 may determine the similarity based on a proximity of the first curve 402 to the second curves (404 and 406, for example). This may be achieved, for example, by calculating a degree of the proximity of the curves. In some embodiments, the computing device 105 may score according to a predetermined number of period pairs, so as to determine the key elements in the period.

Referring back to FIG. 3, in step 304, the computing device 105 may determine whether the similarity is higher than a similarity threshold or not.

If the similarity is higher than the similarity threshold, step 306 is performed and the computing device 105 determines the at least one element as one of the at least one key elements. If the similarity is not greater than the similarity threshold, the computing device 105 may not determine the at least one element as one of the at least one key elements.

Specifically, the similarity threshold may be selected as a fixed value so that all key elements corresponding to a high similarity are determined as the key elements. In some embodiments, at different time periods, the similarity threshold (for example, to be used in a second period later than the first period) may also be adjusted according to the number of the at least one key element determined (for example, in the first period).

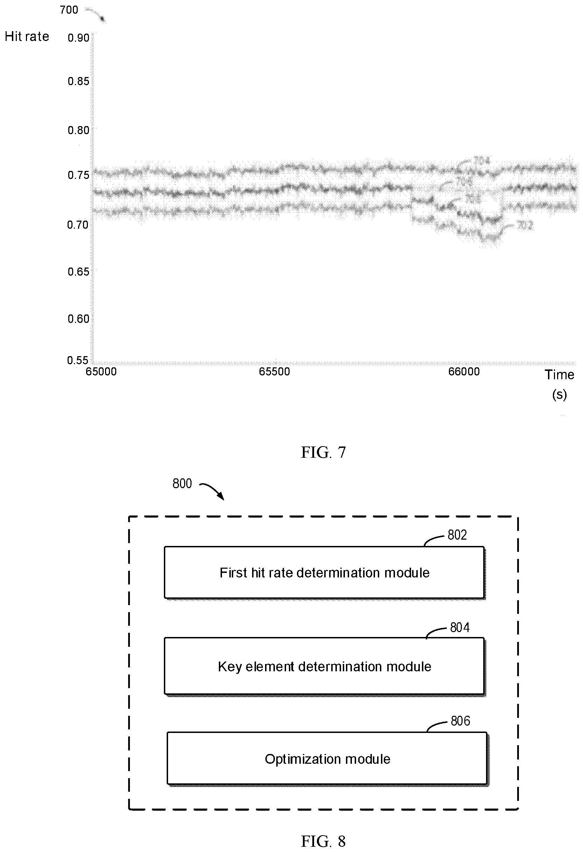

In some embodiments, the computing device may simultaneously draw the first curve and the plurality of second curves as shown in FIG. 7. FIG. 7 shows another schematic diagram 700 of hit rate curves according to some embodiments of the present disclosure. In FIG. 7, a curve 702 (that is, a first curve) indicates a first hit rate, and a plurality of curves (that is, second curves) 704, 706 and 708 respectively indicate a cache hit rate 704 of the cache unit for a first query associated only with element 1 (for example, a key phrase contained in the user query), a cache hit rate 706 for the first query associated with the element 1 and the element 2 (for example, the number of results per page and/or the number of pages), and a cache hit rate 708 for the first query associated with element 1, element 2 and element 3 (for example, elements associated with stress testing). It may be understood that the schematic diagram 700 may further include more second curves with that the elements may be distinguished separately. As intuitively shown, in the period in which the cache hit rate significantly changes (around 66000s), a change trend of the curve 702 for the first hit rate is most similar to that of the curve 708, but not very similar to that of the curve 704 and the curve 706. Therefore, the computing device may determine that the element 3 is the key element.

In some embodiments, the computing device may further derive the first curve and the plurality of second curves, and compare a first derivative value and a plurality of second derivative values at different times (or periods). The computing device may determine at least one second derivative value of the plurality of second derivative values that is little different from the first derivative value, and determine at least one corresponding second curve (and therefore at least one key element) accordingly.

In this way, the change in the hit rate may be analyzed simply and intuitively in a level of the elements forming the user query by determining the similarity of the hit rate based on the hit rate curves, so as to efficiently and accurately determine one or more key elements that have a great impact on the cache hit rate.

FIG. 5 shows a flowchart of a method 500 of determining a number of the user queries hit in a cache unit according to some embodiments of the present disclosure.

As discussed above, in some embodiments, the cache unit 116 (or the offline cache unit 126) may contain (for example, store) a plurality of first key-value pairs (or a plurality of second key-value pairs). In some embodiments, the value in the first key-value pair is the query result. Therefore, for each user query of the plurality of user queries, following steps may be performed to determine the first number of the user queries that may be hit in the cache unit.

In step 502, the computing device 105 may generate a first key for each user query based on a plurality of elements contained in the each user query, by using a signature algorithm.

Specifically, since the user query is associated with the plurality of elements, the plurality of elements may be stitched together (for example, in a predetermined order), and the signature algorithm may be applied to the stitched plurality of elements, so as to determine the key. For example, when the signature algorithm is MD5 algorithm, the first key of MD5 type may be calculated.

In step 504, the computing device 105 may search in a plurality of first key-value pairs based on the first key so as to determine the first query result.

For example, the computing device 105 may acquire, from a plurality of first key-value pairs in the cache unit, a key-value pair with a key same as or corresponding to the first key, and return the value. If a key-value pair with a key same as or corresponding to the second key is not found, a value being null is returned.

The computing device 105 may determine the first number by counting the first query results that are not null. For example, in step 506, the computing device 105 may determine whether the first query result is null or not. If so, step 508 is performed so that a count value M of the first number is incremented by 1. If not, step 510 is performed so that the count value M of the first number remains unchanged. In this way, the number of the user queries hit in the cache unit in a predetermined period may be calculated. After the predetermined period, the count value of the first number may be zeroed so as to restart a count for a next predetermined period.

It may be understood that the first number may also be determined by other counting methods. For example, the first query results that are not null in the predetermined period may be temporarily stored, and counted at an end of the predetermined period.

FIG. 6 shows a flowchart of a method 600 of determining a number of the first queries hit in the cache unit according to some embodiments of the present disclosure.

As discussed above, the cache unit 116 may contain (for example, store) a plurality of first key-value pairs, and the offline cache unit 126 may contain (for example, store) a plurality of second key-value pairs that correspond to the plurality of first key-value pairs. In some embodiments, the value in the second key-value pair is a spaceholder. Therefore, for each user query of the plurality of user queries, following steps may be performed to determine the second number of the first queries that may be hit in the offline cache unit (or the cache unit in some embodiments).

In step 602, the computing device 105 may generate a second key for each first query based on a plurality of elements contained in the each first query, by using a signature algorithm.

Specifically, the first query may be associated with at least one element, and the at least one element is a subset of the first set of elements. Therefore, the computing device 105 may calculate the at least one element so as to determine a key. For example, when the signature algorithm is MD5 algorithm, the second key of MD5 type may be calculated.

In step 604, the computing device 105 may search in a plurality of second key-value pairs based on the second key so as to determine the second query result.

For example, the computing device 105 may acquire, from a plurality of second key-value pairs in the offline cache unit, a key-value pair with a key same as or corresponding to the second key, and return the value. If a key-value pair with a key same as or corresponding to the second key is not found, a value being null is returned.

The computing device 105 may determine the first number by counting the second query results that are not null. For example, in step 606, the computing device 105 may determine whether the second query result is null or not. If so, step 608 is performed so that a count value P of the second number is incremented by 1. If not, step 610 is performed so that the count value P of the second number remains unchanged. In this way, the number of the first queries hit in the offline cache unit (or the cache unit in some embodiments) in a predetermined period may be counted. After the predetermined period, the count value of the second number may be zeroed so as to restart a count for a next predetermined period.

It may be understood that the second number may also be determined by other counting methods. For example, the first query results that are not null in the predetermined period may be temporarily stored, and counted at an end of the predetermined period.

FIG. 8 shows a block diagram of an apparatus 800 of optimizing a search system according to some embodiments of the present disclosure.

The apparatus 800 may include a first hit rate determination module 802 configured to determine a first hit rate of a cache unit of the search system for a plurality of user queries. Each user query is associated with a plurality of elements. The apparatus 800 may further include a key element determination module 804 configured to, for each element in a first set of elements of the plurality of elements, determine at least one key element by: generating a plurality of first queries that correspond to the plurality of user queries and that are associated with at least the element; determining a second hit rate of the cache unit for the plurality of first queries; and determining the element as one of at least one key element, in response to determining that a difference between the second hit rate and the first hit rate is less than a difference threshold. The apparatus 800 may further include an optimization module 802 configured to optimize the search system based on the at least one key element.

In some embodiments, the offline cache unit corresponding to the cache unit is pre-constructed. The key element determination module 804 is further configured to: transmit the plurality of first queries to the offline cache unit; and determine a hit rate of the offline cache unit for the plurality of first queries as the second hit rate.

In some embodiments, the key element determination module 804 is further configured to generate the plurality of first queries asynchronously with processing the plurality of user queries by the search system.

In some embodiments, the key element determination module 804 further includes a similarity determination module configured to determine the similarity between the first hit rate and the second hit rate. The key element determination module 804 is further configured to determine at least one element as one of the at least one key element in response to determining that the similarity is higher than the similarity threshold.

In some embodiments, the similarity determination module is further configured to: draw the first curve for the first hit rate and the second curve for the second hit rate; and determine the similarity based on a degree of proximity between the first curve and the second curve.

In some embodiments, the first hit rate is a ratio of a first number of the queries having respective query results retrievable in the cache unit among the plurality of user queries to a total number of the plurality of user queries within a predetermined period of time, and the second hit rate is a ratio of a second number of the first queries having respective query results retrievable in the cache unit among the plurality of first queries to a total number of the plurality of first queries within a predetermined period of time.

In some embodiments, the cache unit contains a plurality of first key-value pairs, and the first hit rate determination module 802 includes a first number determination module configured to: for each user query of the plurality of user queries, generate a first key for each user query according to a plurality of elements contained in the each user query by using a signature algorithm; search in the plurality of first key-value pairs based on the first key, so as to determine a first query result; and determine the first number by counting the first query results that are not null.

In some embodiments, the offline cache unit contains a plurality of second key-value pairs corresponding to the plurality of first key-value pairs, and the key element determination module 804 includes a second number determination module configured to: for each first query of a plurality of first queries, generate a second key for each first query according to a plurality of elements contained in the each first query by using a signature algorithm; search in the plurality of second key-value pairs based on the second key, so as to determine a second query result; and determine the second number by counting the second query results that are not null.

In some embodiments, the value in the first key-value pair is a spaceholder, and the value in the second key-value pair is the query result.

In some embodiments, the plurality of elements may include but not be limited to: a type of a terminal providing the user query, location information for the terminal providing the user query, a key phrase contained in the user query, a filtering condition contained in the user query, a number of the pages containing query results corresponding to the user query, a number of the query result entries contained in each of the pages containing query results corresponding to the user query, traffic tag(s) associated with the user query, a tag indicating whether the user query belongs to a stressing testing, and so on.

Collecting, storing, using, processing, transmitting, providing, and disclosing etc. of the personal information of the user involved in the present disclosure all comply with the relevant laws and regulations, and do not violate the public order and morals.

According to the embodiments of the present disclosure, the present disclosure further provides an electronic device, a readable storage medium, and a computer program product.

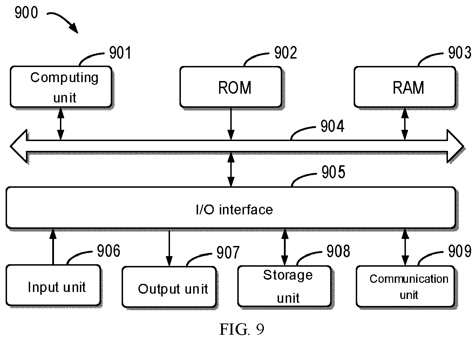

FIG. 9 shows a schematic block diagram of an exemplary electronic device 900 for implementing the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 9, the electronic device 900 may include a computing unit 901, which may perform various appropriate actions and processing based on a computer program stored in a read-only memory (ROM) 902 or a computer program loaded from a storage unit 908 into a random access memory (RAM) 903. Various programs and data required for the operation of the electronic device 900 may be stored in the RAM 903. The computing unit 901, the ROM 902 and the RAM 903 are connected to each other through a bus 904. An input/output (I/O) interface 905 is also connected to the bus 904.

Various components in the electronic device 900, including an input unit 906 such as a keyboard, a mouse, etc., an output unit 907 such as various types of displays, speakers, etc., a storage unit 908 such as a magnetic disk, an optical disk, etc., and a communication unit 909 such as a network card, a modem, a wireless communication transceiver, etc., are connected to the I/O interface 905. The communication unit 909 allows the electronic device 900 to exchange information/data with other devices through a computer network such as the Internet and/or various telecommunication networks.

The computing unit 901 may be various general-purpose and/or special-purpose processing components with processing and computing capabilities. Some examples of the computing unit 901 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and so on. The computing unit 901 may perform the various methods and processes described above, such as the method 200, the method 300, the method 500 and the method 600. For example, in some embodiments, any of the method 200, the method 300, the method 500 and the method 600 may be implemented as a computer software program that is tangibly contained on a machine-readable medium, such as a storage unit 908. In some embodiments, part or all of a computer program may be loaded and/or installed on the electronic device 900 via the ROM 902 and/or the communication unit 909. When a computer program is loaded into the RAM 903 and executed by the CPU 901, one or more steps in any of the method 200, the method 300, the method 500 and the method 600 described above may be executed. Alternatively, in other embodiments, the computing unit 901 may be configured to perform any of the method 200, the method 300, the method 500 and the method 600 in any other appropriate way (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described here may be implemented on a computer including a display device (for example, a CRT (cathode ray tube) or LCD (liquid crystal display) monitor) for displaying information to the user), and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, also known as a cloud computing server or a cloud host. It is a host product in the cloud computing service system to solve shortcomings of difficult management and weak business scalability existing in the traditional physical host and VPS (Virtual Private Server) service. The server may also be a server of a distributed system or a server combined with a blockchain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method (200) of optimizing a search system, comprising:
determining (202) a first hit rate of a cache unit of the search system for a plurality of user queries, wherein each user query is associated with a plurality of elements;
for each element in a first set of elements of the plurality of elements, determining at least one key element by:
generating (204) a plurality of first queries corresponding to the plurality of user queries, wherein the plurality of first queries are associated with at least the element;
determining (206) a second hit rate of the cache unit for the plurality of first queries; and
determining (210) the element as one of at least one key element, in response to determining (208) that a difference between the second hit rate and the first hit rate is less than a difference threshold; and
optimizing (212) the search system based on the at least one key element.

2. The method of claim 1, wherein an offline cache unit corresponding to the cache unit is pre-constructed, and wherein the determining a second hit rate of the cache unit for the plurality of first queries comprises:
transmitting the plurality of first queries to the offline cache unit; and
determining a hit rate of the offline cache unit for the plurality of first queries as the second hit rate.

3. The method of claim 1, wherein the generating the plurality of first queries comprises:
generating the plurality of first queries asynchronously with processing the plurality of user queries by the search system.

4. The method of claim 1, wherein the determining the element as the at least one key element comprises:
determining (302) a similarity between the first hit rate and the second hit rate; and
determining (306) the at least one element as the at least one key element in response to determining (304) that the similarity is greater than a similarity threshold.

5. The method of claim 4, wherein the determining a similarity comprises:
drawing a first curve (402) for the first hit rate and a second curve (404, 406) for the second hit rate; and
determining the similarity based on a degree of proximity between the first curve and the second curve.

6. The method of claim 2, wherein the first hit rate is a ratio of a first number of user queries having respective query results retrievable in the cache unit among the plurality of user queries to a total number of the plurality of user queries within a predetermined period of time; and
wherein the second hit rate is a ratio of a second number of first queries having respective query results retrievable in the offline cache unit among the plurality of first queries to a total number of the plurality of first user queries within the predetermined period of time.

7. The method of claim 6, wherein the cache unit contains a plurality of first key-value pairs, and the determining a first number comprises:
for each user query of the plurality of user queries:
generating (502) a first key for each user query according to the plurality of elements contained in the each user query, by using a signature algorithm; and
searching (504) in the plurality of first key-value pairs based on the first key, so as to determine a first query result; and
determining (506, 508, 510) the first number by counting the first query results that are not null.

8. The method of claim 7, wherein the offline cache unit contains a plurality of second key-value pairs corresponding to the first key-value pairs, and the determining the second number comprises:
for each first user query of the plurality of first user queries:
generating (602) a second key for each first query according to the elements contained in the each first query, by using a signature algorithm; and
searching (604) in the plurality of second key-value pairs based on the second key, so as to determine a second query result; and
determining (606, 608, 610) the second number by counting the second query results that are not null.

9. The method of claim 8, wherein a value in the first key-value pair is a query result, and a value in the second key-value pair is a placeholder.

10. The method of any one of claims 1 to 9, wherein the plurality of elements comprise at least one of
a type of a terminal providing the user query, location information for the terminal providing the user query, a key phrase contained in the user query, a number of pages containing query results corresponding to the user query, a number of query result entries contained in each of the pages containing query results corresponding to the user query, a traffic tag associated with the user query, and a tag indicating whether the user query is a stress testing.

11. An apparatus (800) of optimizing a search system, comprising:
a first hit rate determination module (802) configured to determine a first hit rate of a cache unit of the search system for a plurality of user queries, wherein each user query is associated with a plurality of elements;
a key element determination module (804) configured to: for each element in a first set of elements of the plurality of elements, determine at least one key element by:
generating a plurality of first queries corresponding to the plurality of user queries, wherein the plurality of first queries are associated at least with the element;
determining a second hit rate of the cache unit for the plurality of first queries; and
determining the element as one of at least one key element, in response to determining that a difference between the second hit rate and the first hit rate is less than a difference threshold; and
an optimization module (806) configured to optimize the search system based on the at least one key element.

12. The apparatus of claim 11, wherein an offline cache unit corresponding to the cache unit is pre-constructed, and wherein the key element determination module is further configured to:
transmit the plurality of first queries to the offline cache unit; and
determine a hit rate of the offline cache unit for the plurality of first queries as the second hit rate.

13. An electronic device (900), comprising:
at least one processor (901); and
a memory (908) communicatively connected to the at least one processor (901), wherein the memory (908) stores instructions executable by the at least one processor (901), and the instructions, when executed by the at least one processor (901), cause the at least one processor (901) to implement the method of any one of claims 1 to 10.

14. A non-transitory computer-readable storage medium having computer instructions stored thereon, wherein the computer instructions allow a computer to implement the method of any one of claims 1 to 10.

15. A computer program product containing a computer program, wherein the computer program, when executed by a processor, causes the processor to implement the method of any one of claims 1 to 10.
